# EUROPEAN PATENT SPECIFICATION

(11) **EP 3 805 000 B1**
(45) Date of publication and mention of the grant of the patent: **09.10.2024**
(21) Application number: 19814664.9
(22) Date of filing: 16.05.2019
(51) Int. Cl.: B41M 5/00, C03C 17/34, C09D 11/322, C09D 11/54

(54) **METHOD FOR DECORATING GLASS AND DECORATED GLASS**
VERFAHREN ZUM DEKORIEREN VON GLAS UND DEKORIERTES GLAS
PROCÉDÉ DE DÉCORATION DE VERRE ET VERRE DÉCORÉ

(30) Priority: 05.06.2018 JP 2018107821
(43) Date of publication of application: 14.04.2021
(73) Proprietor: FUJIFILM Corporation, Tokyo 106-8620 (JP)
(72) Inventor: MAKUTA, Toshiyuki, Kanagawa 258-8577 (JP)
(74) Representative: Klunker IP Patentanwälte PartG mbB
(86) International application number: PCT/JP2019/019447
(87) International publication number: WO 2019/235157

(56) References cited:
- WO-A1-02/086924
- WO-A1-2007/020779
- WO-A1-2016/201204
- JP-A- 2002 302 627
- JP-A- 2003 261 397
- JP-A- 2004 235 400
- JP-A- 2005 154 186
- US-A1- 2009 214 840
- US-A1- 2010 098 952
- US-A1- 2017 107 388
- US-A1- 2017 183 524

## Description

### BACKGROUND OF THE INVENTION

### 1. Field of the Invention

The present invention relates to a method of decorating glass and a decorated glass.

### 2. Description of the Related Art

In recent years, a method of decorating glass to fix a clear and sharp image on a glass base material and a decorated glass is being attracted attention.

By applying and fixing a colorant to a glass base material that is an inorganic base material having high transparency, a decorated glass having excellent appearances and applicable to various uses can be obtained.

As a decoration method for inorganic members such as glass, a method of manufacturing a painted heat-resistant member in which ink containing organic polymers and inorganic pigments is printed on a heat-resistant inorganic member by an ink jet method, and the obtained ink image is heated to remove organic components is proposed (see JP2015-009387A).

In addition, an ink set for decorating an inorganic base material obtained by combining a first ink composition containing inorganic pigments, polymerizable monomers, and polymerization initiators and a second ink composition containing hot-melt inorganic powder, polymerizable monomers, and polymerization initiators is proposed. As a method of using the ink set, a method of manufacturing an inorganic sintered body in which a first ink composition is printed on a non-absorbable inorganic member such as glass, energy is applied to cure the first ink composition to form an inorganic pigment layer, and a second ink is applied to the inorganic pigment layer, energy is applied to cure the second ink composition to form a hot-melt inorganic powder layer, and thereafter, the hot-melt inorganic powder layer is subjected to calcination to form an inorganic sintered body (see JP2017-075251A).
JP 2002302627 A discloses a two-component reactive recording liquid which is equipped with at least an aqueous ink composition containing a coloring material and a cationic resin emulsion and a reaction liquid containing an anionic reactive agent and an anionic resin emulsion which generates aggregates when coming into contact with the ink composition. The recording liquid can print fine images on both absorbable and non-absorbable recording media.
US 2010/098952 A1 discloses a method and a printing device for decorating glass or ceramic items, wherein a pigment layer is sandwiched between two glass frit layers, wherein at least the pigment formulation layer and the upper glass frit formulation layer can be imprinted by an inkjet printing process.

### SUMMARY OF THE INVENTION

In order to form a wear-resistant image on a non-absorbable inorganic material such as glass, as described above, it is necessary to apply an ink composition containing a colorant to glass or the like and then to perform calcination so that the image is fixed.

According to the method described in JP2015-009387A, in a case where an ink containing organic polymers and inorganic pigments is printed on a non-absorbable base material by an ink jet method, a clear and sharp image may not be obtained as a designed value due to landing interference.

According to the studies carried out by the present inventors, it has been found that in a case of using an image or glass as a base material after calcination, the glass base material itself after calcination may generate turbidity due to a compound, and the like that are used in combination in order to disperse inorganic pigments into ink and that contain elements other than carbon, oxygen, nitrogen, fluorine, and hydrogen, such as certain inorganic elements, in a certain amount or more.

In addition, in the method of manufacturing an inorganic sintered body described JP2017-075251A, it is necessary to perform a step of applying two kinds of ink compositions to a base material, applying energy thereto, and performing curing, respectively. In addition, there are problems that the efficiency in manufacturing steps is low and that a manufacturing apparatus is complicated. Furthermore, depending on a kind of hot-melt inorganic powder to be used, there is concern that turbidity in the above described image or the glass base material after calcination may be generated.

An object to be achieved by the present invention is to provide a method of decorating glass in which an image having excellent color reproducibility and wear resistance can be formed on a glass base material, and the generation of turbidity in the glass base material obtained after the image being heated and fixed is suppressed.

Another object is to provide a decorated glass having an image having excellent color reproducibility and wear resistance on a glass base material.

The object is achieved by the method claimed in claim 1. The method yields a glass having desired properties. Embodiments of the invention are claimed in the dependent claims.

Thus, the present invention provides a method of decorating glass in which an image having excellent color reproducibility and wear resistance is formed on a glass base material, and generation of turbidity in the glass base material obtained after the image being heated and fixed is suppressed.

The method according to the present invention makes it possible to produce a decorated glass comprising, in the following order: a glass base material; a lower layer formed by using an ink aggregating agent-containing composition having a content of elements other than C, O, N, F, and H of 1.0% by mass or less; and an image containing an inorganic pigment, in which a difference in visible light transmittance between a region having the lower layer and a region having no lower layer in the glass base material is less than 1%.

### BRIEF DESCRIPTION OF THE DRAWINGS

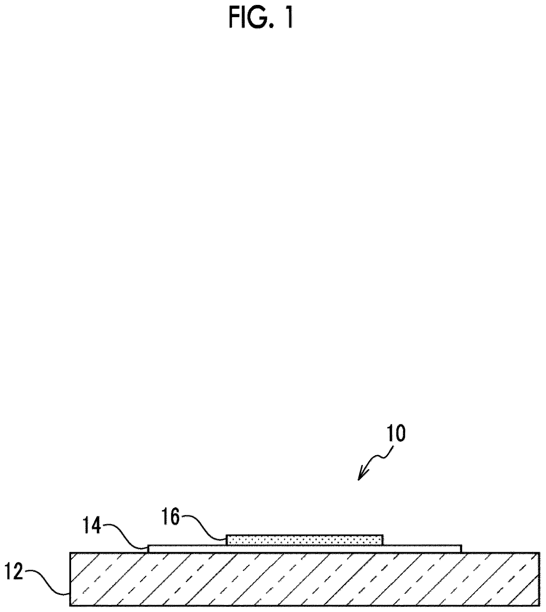

Fig. 1 is a schematic cross-sectional view showing an embodiment of a decorated glass obtained by a method of decorating glass of the present disclosure.

### DESCRIPTION OF THE PREFERRED EMBODIMENTS

In the present specification, the numerical range expressed by using "to" means a range including numerical values described before and after "to" as a lower limit value and an upper limit value.

In the present specification, in a case where a plurality of substances corresponding to each component in a composition, unless otherwise specified, the amount of each component in the composition means the total amount of the plurality of substances present in the composition.

In addition, the expression "substituent" is used in a sense including an unsubstituted form and a form further having a substituent, unless otherwise specified. For example, the expression an "alkyl group" is used in a sense including both an unsubstituted alkyl group and an alkyl group further having a substituent. The same applies to other substituents.

In the present specification, "(meth)acryl" represents at least one of acryl or methacryl, and "(meth)acrylate" represents at least one of acrylate or methacrylate.

Regarding numerical ranges described in a stepwise manner in the present specification, an upper value or a lower value of a certain numerical range may be replaced with an upper value or a lower value of another numerical range described in a stepwise manner. In addition, regarding a numerical range described in the present specification, an upper value or a lower value of a certain numerical range may be replaced with a value shown in Examples.

Furthermore, in the present disclosure, a combination of two or more preferable aspects is a more preferable aspect.

In the present specification, visible light refers to light in a wavelength range of 380 nm to 780 nm. In addition, the term "transparent" refers that the light-transmitting property at a wavelength of 500 nm is 70% or more.

In the present specification, the term "image having excellent color reproducibility" refers to an image in which a color of an inorganic pigment contained in an ink composition and used for image formation is reflected to a formed image, and the occurrence of color turbidity and the undesired color change are suppressed.

In the present specification, the term "step" includes not only an independent step but also a step provided that the intended purpose of the step is achieved even in a case where the step cannot be clearly distinguished from other steps.

Hereinafter, a method of decorating glass according to an embodiment of the present invention will be described in detail with reference to examples of used materials and steps.

### <Method of Decorating Glass>

A method of decorating glass (hereinbelow, simply referred to as the "decoration method") according to the embodiment of the present invention includes: a step of applying an ink aggregating agent-containing composition, which is an ink aggregating agent-containing composition containing an ink aggregating agent and which has a content of C, O, N, F, and H of 1.0% by mass or less with respect to a total solid content of the ink aggregating agent-containing composition, on a glass base material (hereinbelow, referred to as a step A); a step of forming an ink image by applying an ink composition containing an inorganic pigment, resin particles, and water by an ink jet method to at least a region on the glass base material, to which the ink aggregating agent-containing composition has been applied (hereinbelow, referred to as a step B); and a step of heating the formed ink image to a melting temperature of glass or higher (hereinbelow, referred to as a step C).

In the decoration method according to the embodiment of the present disclosure, both the ink aggregating agent-containing composition and the ink composition are aqueous compositions, and there is an advantage that not only the environmental load is extremely low. but also an image having excellent color reproducibility and wear resistance can be formed on a non-absorbable glass base material.

### [Step A]

The step A is a step of applying an ink aggregating agent-containing composition containing an ink aggregating agent (hereinbelow, the ink aggregating agent may be referred to as an aggregating liquid) onto a glass base material.

The aggregating liquid may be applied to at least an area of the glass base material where the ink image is formed. The aggregating liquid may be applied to the entire surface of the glass base material, or may be applied locally only to a necessary region. From the viewpoint of high efficiency, it is preferable that the ink image is locally applied to the area where the ink image is formed. The details of the aggregating liquid will be described later.

A method of applying the aggregating liquid onto the glass base material is not particularly limited, and for example, the aggregating liquid can be applied by a known coating method in a case of applying the aggregating liquid onto the entire surface of the glass base material.

Examples of the known coating methods include coating methods such as spray coating, and coating with a coating roller, and a dipping method. Specifically, examples thereof include a size pressing method such as a horizontal size pressing method, a knife coating method, a roll coating method, a blade coating method, a bar coating method, a cast coating method, a gravure coating method, a curtain coating method, a die coating method, a brush coating method, a transfer method, and the like. In addition, a coating method in which the coating amount is controlled by using a coating device provided with a liquid amount restriction member such as a coating device described in JP1998-230201A (JP-H10-230201A) may be used.

In a case where the aggregating liquid is applied locally, the aggregating liquid can be applied by a known printing method such as an offset printing method, a screen printing method, an ink jet method, or the like. Among these, it is preferable to apply the aggregating liquid by an ink jet method from the viewpoint that the aggregating liquid can be accurately applied to a desired region.

### (Glass Base Material)

The glass base material that can be used in the decoration method according to the embodiment of the present disclosure is formed of glass, and can be appropriately selected according to the purpose of use of glass decorated by the decoration method of the present disclosure (hereinafter, also referred to as decorated glass) such as a use or necessary strength of the decorated glass.

Examples of glass used for the glass base material include soda glass (soda lime glass), soft glass such as crystal glass that further contains lead oxide, zinc oxide, potassium oxide, and the like and has enhanced refractive index and transparency, hard glass such as borosilicate glass and quartz glass.

Since the purpose is decoration, it is preferable to use transparent glass that transmits visible light. In addition, according to the purpose, colored glass may be used as a base material.

A shape of the glass base material is not particularly limited. Generally, for example, flat glass used for window glass, interior materials, interior decorations such as partitions, and glass painting is used. In addition, a glass plate having a curved surface may be used as the base material, and a solid-shaped glass molded body molded into a desired shape such as a cylindrical shape, or the like may be used as the base material.

Since the method of decorating glass according to the embodiment of the present disclosure includes a step of forming an ink image using an ink jet method, it is preferable to use flat glass from the viewpoint of productivity.

The glass base material before being decorated may be washed to remove dust, oil, and the like, and then may be subjected to a pretreatment such as drying. A surface of the glass base material to which the aggregating liquid is applied, after the pretreatment, preferably has a water contact angle of 10° to 150°, more preferably has a water contact angle of 30° to 100°.

As the water contact angle in the present specification, an arithmetic mean value of values, which are obtained by performing dropwise addition of 1 µL of pure water onto a surface of an anti-fogging layer and measuring a contact angle 5 times by the 0/2 method, with a fully automatic contact angle meter (model number: DM-701, manufactured by Kyowa Interface Science Co.. Ltd.) as a measurement device, under conditions of an atmosphere temperature of 25°C and a relative humidity of 50%, is used.

In addition, pretreatment other than washing, such as corona discharge treatment, may be performed for the purpose of improving an affinity between the glass base material and the aggregating liquid.

### (ink aggregating agent-containing Composition: aggregating liquid)

The aggregating liquid contains an ink aggregating agent.

As the ink aggregating agent, any compounds can be used as long as the ink aggregating agent is a compound capable of aggregating ink.

Examples of the ink aggregating agent include acidic compounds, cationic polymers, polyvalent metals, and the like.

According to the study of the present inventors, it has been confirmed that color turbidity was generated on a surface of glass since a large number of elements other than carbon, oxygen, nitrogen, and hydrogen are contained in the aggregating liquid, and in particular, turbidity was generated on a region of the glass base material, to which the aggregating liquid is applied, and no ink composition is applied to cause visible light transmittance to be decreased.

Therefore, in the aggregating liquid of the present disclosure, a content of elements other than C, O, N, F, and H, which are contained in the aggregating liquid in a total solid content, is 1.0% by mass or less.

The content of elements other than C, O, N, F, and H in the aggregating liquid is 1.0% by mass or less, thereby suppressing color turbidity of the ink image due to elements other than C, O, N, F, and H, and turbidity on the region of the glass base material after calcination, to which the aggregating liquid is applied from being generated.

The content of elements other than C, O, N, F, and H, which are contained in the aggregating liquid in the total solid content, is preferably 0.5% by mass or less, and more preferably 0.1 % by mass or less. The content of elements other than C, O, N, F, and H in the aggregating liquid is preferably as small as possible, and is even more preferably a detection limit or less. The term "detection limit or less" includes 0% by mass, that is, it means that no element is included.

The elements other than C, O, N, F, and H in the present specification also include elements contained in molecules containing these elements.

The aggregating liquid is applied to the glass base material and then the glass base material is calcinated. Thereby, most of the elements selected from C, O, N, and H disappear with the calcination. In addition, even though the elements selected from C, O, N. F, and H remain on the glass base material after calcination, in a case where the residual amount is 1.0% by mass or less, the possibility that the elements affect the ink composition to be subsequently applied and the glass base material is extremely low.

Examples of means for reducing the content of elements other than C, O, N, F, and H contained in the aggregating liquid to 1.0% by mass or less include to select a component, such as an organic acidic compound or an ammonium salt, which contains no elements other than C, O, N, F, and H as an aggregating agent or which contains extremely few elements, to use an organic acidic compound in combination with an extremely small amount of an aggregating compound having atoms other than C, O, N, F, and H, and the like. Examples of an aggregating compound having atoms other than C, O, N, F, and H include acidic compounds having atoms other than C, O, N, F, and H, such as phosphoric acid and sulfonic acid, polyvalent metals, and the like.

Furthermore, as an aggregating agent containing no water, no solvent, no elements other than, C, O, N, F. and H, it is effective to select a high-purity aggregating agent containing compounds having atoms other than C, O, N, and F as impurities, as few as possible.

In addition, as an additive other than water, a solvent, and an aggregating agent, it is also effective means for adding no compounds having atoms other than C, O, N, F, and H, or adding an extremely small amount of compounds.

In the aggregating liquid of the present disclosure, a total content of elements of C, O, N, F, and H, which are contained in the aggregating liquid in a total solid content, is 99% by mass or more. The total content of elements of C, O, N, F, and H, which are contained in the aggregating liquid in the total solid content, is preferably 99.5% by mass or more, and more preferably 99.9% by mass or more.

The content of elements other than C, O, N, F, and H, which are contained in the aggregating liquid, can be measured by the following method.

### (Method of Measuring Kind of Each Element and Content)

A mixed liquid is prepared by adding 20 times the amount of concentrated nitric acid with respect to the total amount of an aggregating liquid on a mass basis to the aggregating liquid as a sample to be mixed, and the mixed liquid is carbonized at 230°C using a carbonizing device (Multiwave 3000, manufactured by PerkinElmer Inc.). The term "carbonization" refers to a treatment in which a sample is calcinated to remove an organic compound by calcination and an inorganic compound remains.

The content of elements other than C, O, N, F, and H can be measured by performing elemental analysis on the carbonized sample using the following analyzer, and in the present specification, the result obtained by using the following analyzer is adopted.

### Perkin Elmer Inc.: Optima 7300DV (ICP-OES, Inductively Coupled Plasma Optical Emission Spectrophotometry)

In a step (C) described later, in a case of heating (calcinating) a sample at a temperature equal to or higher than a melting temperature of glass used for the glass base material for fixing an image, most of the elements C, O, N, and H disappear, and the element F remains as an element derived from the aggregating liquid after calcination. In addition, elements other than C, O. N, and H contained in the aggregating liquid remain even after calcination. Therefore, the content of elements other than C, O, N, F, and H contained in the aggregating liquid can be detected by analyzing a region where the aggregating liquid is adhered after calcination and an ink image is not formed.

In an end product, the analysis of kinds and amounts of the elements existing in the region where the aggregating liquid is adhered is performed as follows.

As the end product, the decorated glass is used as a sample, and in the decorated glass, a region where the aggregating liquid is adhered and no ink image is formed is subjected to elemental analysis using the following analyzer. According to this method, it is possible to measure the kinds and amounts of the elements by directly applying the decorated glass to the analyzer in a non-destructive manner.

### Scanning X-ray fluorescence analyzer, ZSX Primus II (trade name: manufactured by Rigaku Corporation. XRF: X-ray fluorescence)

From the above viewpoint, the aggregating liquid in the present disclosure may contain a polyvalent metal salt as an ink aggregating agent, and the polyvalent metal salt is used in an amount such that a total content of elements other than C, O, N, F, and H, which are derived from the polyvalent metal salt, is within a range of 1.0% by mass or less.

Examples of the polyvalent metal that can be used in the aggregating liquid of the present disclosure include polyvalent metals described in the paragraph 0155 of JP201 1-042150A.

### -Ink Aggregating Agent-

From the viewpoint that the content of elements other than C, O, N, F, and H can be suppressed from being reduced, as the ink aggregating agent, it is preferable to contain at least one kind of compound selected from the group consisting of acidic compounds and cationic polymers, as the ink aggregating agent, and it is more preferable to contain acidic compounds.

Examples of cationic polymers that can be used in the aggregating liquid include cationic polymers described in the paragraph 0156 of JP2011-042150A.

Examples of the acidic compounds include acidic substances that can lower the pH of aqueous ink. As the acidic compound, either an organic acidic compound or an inorganic acidic compound may be used, and two or more kinds of the organic acidic compound and the inorganic acidic compound may be used in combination.

Among these, the organic acidic compound is preferably used from the viewpoints of easy removal by calcination and easily suppressing the content of elements other than C, O, N, F, and H from being reduced.

Examples of the organic acidic compound include an organic compound having an acidic group, an organic acidic compound having a carboxyl group and ascorbic acid are preferable, and an organic acidic compound having a carboxyl group is more preferable.

Examples of the acidic group include a phosphoric acid group, a phosphonic acid group, a phosphinic acid group, a sulfate group, a sulfonic acid group, a sulfinic acid group, a carboxyl group, and the like. Among these, the acidic group contained in the acidic compound is preferably a carboxyl group, from the viewpoint of effects and furthermore from the viewpoint of easily suppressing the content of elements other than C, O, N, F, and H from being reduced.

As organic acidic compounds having a carboxyl group (organic carboxylic acids), polyacrylic acid, acetic acid, glycolic acid, malonic acid, malic acid (preferably DL-malic acid), maleic acid, succinic acid, glutaric acid, fumaric acid, citric acid, tartaric acid, phthalic acid, 4-methylphthalic acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumarinic acid, thiophenecarboxylic acid, nicotinic acid, derivatives of these compounds or salts thereof (for example, polyvalent metal salts), and the like are preferable.

These compounds may be used alone, or two or more kinds of the compounds may be used in combination.

The organic carboxylic acid is preferably a divalent or higher carboxylic acid (hereinafter, also referred to as polyvalent carboxylic acid) from the viewpoint of an aggregation rate of the aqueous ink, at least one kind selected from malonic acid, malic acid, maleic acid, succinic acid, glutaric acid, fumaric acid, tartaric acid, 4-methylphthalic acid, and citric acid is more preferable, and malonic acid, malic acid, tartaric acid, and citric acid are even more preferable.

The organic acidic compound preferably has a low pKa. As a result, a surface charge of particles such as pigments and resin particles in the aqueous ink, which are held in stable dispersion by a weakly acidic functional group, such as a carboxyl group, is lowered by being brought into contact with the organic acidic compound having a lower pKa, so that dispersion stability can be reduced. The organic acidic compound contained in the aggregating liquid preferably has a low pKa, a high solubility in water, and a valence of 2 or more, and is more preferably a divalent or trivalent acidic substance having a high buffering capacity in a lower pH region than the pKa of a functional group (for example, a carboxyl group, or the like) that stabilizes the dispersion of particles in the aqueous ink.

Examples of the inorganic acidic compound include phosphoric acid, nitric acid, nitrous acid, sulfuric acid, hydrochloric acid, and the like, but the inorganic acidic compound is not particularly limited thereto.

In a case where the aggregating liquid contains an acidic compound, pH (25°C) of the aggregating liquid is preferably 0.1 to 6.0, more preferably 0.5 to 5.0, and even more preferably 0.8 to 4.0.

The aggregating liquid may contain only one kind of ink aggregating agent, or two or more kinds of the ink aggregating agents may be used in combination.

The content of the ink aggregating agent for aggregating the ink composition in the aggregating liquid is preferably 1% by mass to 50% by mass, more preferably 3% by mass to 45% by mass, and even more preferably 5% by mass to 40% by mass, with respect to the total amount of the aggregating liquid.

### -Water-

The aggregating liquid contains water as a solvent.

A content of water is preferably 50% by mass to 90% by mass, more preferably 60`% by mass to 80% by mass, with respect to a total mass of the aggregating liquid.

### -Other Components-

In addition to the above described aggregating agent and water as a solvent, depending on the purpose, the aggregating liquid can contains components other than the aggregating agent and water (may be referred to as other components) as long as the effect is not impaired.

Examples of the other components include a water-soluble organic solvent for obtaining effects of wetting and permeation acceleration, a surfactant capable of adjusting viscosity, surface tension, and the like of the aggregating liquid into a suitable range, a thickener, and the like.

### -Water-soluble Organic Solvent-

The aggregating agent may contain at least one kind of water-soluble organic solvent.

An effect of prevention of drying, wetting, or permeation acceleration can be obtained by containing the water-soluble organic solvent. In a case where the aggregating liquid is applied to the base material by the ink jet method, a water-soluble organic solvent is effectively used as an anti-drying agent that prevents clogging caused by an aggregate formed by an aggregating agent adhered and dried on an ink jetting port of an injecting nozzle.

From the viewpoint of obtaining good effects of prevention of drying and wetting, a water-soluble organic solvent having a vapor pressure lower than that of water is preferable.

Examples of the water-soluble organic solvent include alkanediols (polyhydric alcohols) such as glycerin, 1.2,6-hexanetriol, trimethylolpropane, ethylene glycol, propylene glycol, diethylene glycol, triethylene glycol, tetraethylene glycol, pentaethylene glycol, dipropylene glycol, 2-butene-l,4-diol, 2-ethyl-1,3-hexanediol, 2-methyl-2,4-pentanediol. 1,2-octanediol, 1,2-hexanediol, 1,2-pentanediol, and 4-methyl-1,2-pentanediol; sugars such as glucose, mannose, and fructose; sugar alcohols; hyaluronic acid; alkyl alcohols having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, tripropylene glycol monomethyl ether, dipropylene glycol mono-n-propyl ether, and dipropylene glycol mono-iso-propyl ether; 2-pyrrolidone; N-methyl-2-pyrrolidone; and the like. These may be used alone or two or more kinds thereof may be used in combination.

For the purpose of prevention of drying or wetting, polyhydric alcohols are useful, and examples thereof include glycerin, ethylene glycol, diethylene glycol, triethylene glycol, propylene glycol, dipropylene glycol, tripropylene glycol, 1,3-butanediol, 2,3-butanediol, and the like.

As the water-soluble organic solvents, propylene glycol and ether are preferable, and propylene glycol is more preferable, from the viewpoint of easy disappearance during heating.

In a case where the aggregating liquid contains a water-soluble organic solvent, only one kind of water-soluble organic solvent may be contained or two or more kinds of water-soluble organic solvents may be contained.

A content in a case where the aggregating liquid contains a water-soluble organic solvent is preferably in a range of 5% by mass to 40% by mass, and is more preferably in a range of 10% by mass to 30% by mass, with respect to the total amount of the aggregating liquid.

### -Surfactant-

The aggregating liquid can include a surfactant. The surfactant can be used as a surface tension adjuster. As the surface tension adjuster, a compound having a structure including both a hydrophilic moiety and a hydrophobic moiety in a molecule can be effectively used, and any of an anionic surfactant, a cationic surfactant, an amphoteric surfactant, a nonionic surfactant, and a betaine-based surfactant can be used. Among these, the nonionic surfactant or the anionic surfactant is preferable from the viewpoint of an aggregation rate of ink, and the nonionic surfactant is more preferable from the viewpoint of a defoaming effect.

Examples of the surfactant also include compounds as surfactants described in pages 37 to 38 of JP1984-157636A (JP-S59-157636A) and Research Disclosure No. 308119 (1989). In addition, fluorine (alkyl fluoride)-based surfactants, silicone-based surfactants, and the like described in JP2003-322926A, JP2004-325707A, and JP2004-309806A can also be exemplified.

In a case where the aggregating liquid contains a surfactant, only one kind of surfactant may be contained or two or more kinds of surfactants may be contained.

As the surfactant contained in the aggregating liquid, the surface tension can be appropriately adjusted, fluorine-based nonionic surfactants, acetylene glycol-based surfactants, and the like are preferably used from the viewpoints of being able to appropriately adjust surface tension, being able to suppress the generation of air bubbles, jettability in a case of jetting the aggregating liquid by the ink jet method, and affinity with the glass base material. Among these, the fluorine-based surfactants are more preferable from the viewpoint of affinity with the glass base material.

Preferred examples of the fluorine-based surfactants include nonionic surfactants having a fluoroalkyl group as a hydrophobic group. As the fluoroalkyl group, a perfluoroalkyl group is preferable.

More specifically, as the fluorine-based surfactants, perfluoroalkylcarboxylic acid, a fluorotelomer alcohol, perfluoro(polyoxyalkylene alkyl ether), and the like are preferable, and perfluoroalkylcarboxylic acid is more preferable from the viewpoint of more effectively reducing the surface tension.

The molecular weight of the fluorine-based surfactant can be appropriately selected. Among these, from the viewpoint of ink jet jettability in an aqueous aggregating liquid, the molecular weight of the fluorine-based nonionic surfactant is preferably 1000 or more and 10000 or less, and more preferably 2000 or more and 8000 or less.

The surfactant used in the aggregating liquid is preferably a surfactant capable of forming micelles in an aqueous system. Here, an ability to form micelles in an aqueous system refers to a property of forming stable micelles in a case of adding 3% by mass or more of the surfactant to ion exchange water at 25°C.

3% by mass of the surfactant to be evaluated is added to the ion exchange water at 25°C and mixed to obtain a mixed liquid, and the mixed liquid is left to stand at 25°C for 1 hour. In a case where the mixed liquid is transparent when visually observed, it can be confirmed that the stable micelles are formed.

Perfluoro(polyoxypropylene ethyl ether), or the like is preferably used as the fluorine-based surfactant. A commercially available product may be used as the fluorine-based surfactant. Preferred examples of the commercially available product include Surflon (trade name) series that are water-soluble fluorine-based nonionic surfactants, manufactured by AGC Seimi Chemical Co.. Ltd., Surflon S-242 and S-243 which are nonionic and which have ethylene oxide groups as a hydrophilic partial structure, EF-PP31N09 and EF-PP31N15 manufactured by Mitsubishi Materials Corporation, which are nonionic and which have perfluoroalkyl groups, and the like.

In a case where the aggregating liquid contains a surfactant, the specific amount of the surfactant in the aggregating liquid is preferably in a range of the content that provides the preferable surface tension described above, and there is no particular limitation other than the above range. From the viewpoint that an effect of containing the surfactant can be exhibited, the amount of the surfactant is preferably 0.01% by mass or more, more preferably 0.1% by mass to 5% by mass, and even more preferably 0.2% by mass to 3% by mass.

In addition to the above components, examples of components that can be used in the aggregating liquid include known additives such as a solid wetting agent, colloidal silica, an inorganic salt, an antifading agent, an emulsification stabilizer, a permeation enhancer, an ultraviolet absorber, a preservative, a fungicide, a pH adjuster, a viscosity adjuster, a rust inhibitor, and a chelating agent.

### (Preferred Physical Properties of Aggregating Liquid)

The surface tension of the aggregating liquid at 25°C is preferably 30 mN/m or less from the viewpoint of good affinity with the glass base material.

The surface tension (25°C) of the aggregating liquid is more preferably 5 mN or more and 30 mN/m or less, and even more preferably 15 mN/m or more and 25 mN/m or less.

As the surface tension of the aggregating liquid in the present specification, a value measured using Automatic Surface Tensiometer CBVP-Z (manufactured by Kyowa Interface Science Co., Ltd.) under a condition that a temperature of the aggregating liquid is 25°C is adopted.

The viscosity of the aggregating liquid at 30°C can be 1 mPa·s to 40 mPa·s from the viewpoint that the aggregating liquid is easily applied to the glass base material. In a case where the aggregating liquid is applied by an ink jet method, the viscosity of the aggregating liquid is preferably 1 mPa·s to 20 mPa·s, and more preferably 2 mPa·s to 12 mPa·s from the viewpoint of jettability.

As the viscosity of the aggregating liquid in the present specification, a value measured using VISCOMETER TV-22 (manufactured by TOKI SANGYO CO., LTD.) under a condition in which a temperature of the aggregating liquid is 30°C is adopted.

### <Step B>

The step B is a step of forming an ink image by applying an ink composition containing an inorganic pigment, resin particles, and water by an ink jet method to at least a region on the glass base material, to which the ink aggregating agent-containing composition has been applied.

The ink composition is applied to the region to which the aggregating liquid containing the ink aggregating agent has been applied, thereby suppressing landing interference generated during the application of the ink composition by the ink jet method, and thus a clear and sharply outlined ink image is formed.

The ink jet method is not particularly limited, and for example, any known methods such as an electric charge control method of jetting ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used. As the ink jet method, particularly, an ink jet method as a method described in JP1979-059936A (JP-S54-059936A), in which ink subjected to an action of thermal energy undergoes a sudden volume change, and the ink is jetted from a nozzle by the action force due to this state change, can be effectively used.

As an ink jet head, a shuttle system of performing recording by using a short serial head while the head is scanned in a width direction of a glass base material, and a line system of using a line head having recording elements arranged correspondingly to the entire area of one side of a glass base material are used. In the line system, image recording can be performed on the entire surface of the glass base material by scanning the glass base material in a direction intersecting the arrangement direction of the recording elements, and a transporting system of performing scanning using the short head is not necessary. In addition, since a complicated scanning control of the carriage movement and the glass base material are not necessary and only the glass base material moves, a recording speed can be increased as compared with the shuttle system.

A method of recording an image according to the present disclosure can be applied to any of the above systems, but generally in a case of being applied to the line system in which a dummy jet is not performed, an effect of largely improving jetting accuracy and image rub resistance is exhibited.

The amount of liquid droplets of ink jetted from the ink jet head is preferably 1 pl (picoliter) to 10 pl, and more preferably 1.5 pl to 6 pl, from the viewpoint of obtaining a high-definition image. In addition, from the viewpoint of improving unevenness of an image and a connection between continuous gradations, it is also effective to jet by the amount of different liquid droplets in combination.

A multicolor ink image can be formed by using a recording device having a plurality of ink jetting heads corresponding to the number of color tones of an ink composition.

The ink jet recording device that can be used in the decoration method according to the embodiment of the present disclosure is not particularly limited, and known image forming devices described in JP2010-083021A, JP2009-234221A, JP1998-175315A (JP-H10-175315A), and the like can be used.

In addition, an ink image can be formed on a glass base material other than a flat glass base material by using an ink jet recording device capable of printing on a curved surface.

For example, ink jet printer UJF3042HG (manufactured by Mimal<i Engineering Co., Ltd.) can be mounted on KEBAB unit to print on a cylindrical glass base material.

### (Ink Composition)

The ink composition used in the decoration method according to the embodiment of the present disclosure is not particularly limited, as long as the ink composition is an aqueous ink composition containing an inorganic pigment, resin particles, and water. In the present disclosure, the aqueous ink composition refers to an ink composition containing water in the amount of 50% by mass or more with respect to a total mass of the ink.

### -Inorganic Pigment-

The ink composition contains inorganic pigments, whereby the color tones of the ink image formed on the glass base material through a heating step described later are good and deterioration of color due to heating is suppressed. Therefore, color reproducibility of the image after being fixed is good.

As the inorganic pigments, inorganic pigments known in the field of ink jet ink can be used.

Examples of the inorganic pigments include titanium oxide, iron oxide, calcium carbonate, barium sulfate, aluminum hydroxide, barium yellow, cadmium red, and chrome yellow.

Examples of colorants preferably include inorganic pigments exemplified in colorants described in paragraphs 0096 to 0100 of JP2009-241586A.

The ink composition may contain only one kind of inorganic pigment, or two or more kinds of inorganic pigments may be used in combination depending on the purpose.

A content of the inorganic pigment is preferably 1% by mass to 50% by mass, more preferably 2% by mass to 40% by mass, even more preferably 5% by mass to 35% by mass, particularly preferably 5% by mass to 30% by mass, with respect to a total mass of the ink composition.

### -Water-

The ink composition contains water.

A content of water is preferably 20% by mass to 90% by mass, and more preferably 40% by mass to 80% by mass, with respect to a total mass of the ink composition.

### -Dispersant-

The ink composition used in the present disclosure may contain a dispersant. The dispersant is useful for dispersing the above inorganic pigment. The dispersant may be either a polymer dispersant or a low-molecular-weight surfactant-type dispersing agent. The polymer dispersant may be either a water-soluble dispersant or a water-insoluble dispersant.

Preferred examples of the dispersant include dispersants described in paragraphs 0080 to 0096 of JP2016-1453 12A.

In a case of using a dispersant, a mixing mass ratio (p:s) of the inorganic pigment (p) and the dispersant (s) is preferably in a range of 1:0.06 to 1:3, more preferably in a range of 1:0.125 to 1:2, and even more preferably in a range of 1:0.125 to 1:1.5.

### -Resin Particles-

The ink composition in the present disclosure contains at least one kind of resin particles.

By containing the resin particles, the fixing property of the ink composition onto the glass base material and the rub resistance of the image formed on the glass base material before calcination can be more improved in great part. In addition, the resin particles have a function of fixing the ink composition, that is an image, by increasing a viscosity of the ink composition in a manner that the resin particles are aggregated or held in unstable dispersion in a case of bring the resin particles into contact with the above described ink aggregating agent. Such resin particles are preferably used in an aspect in which the resin particles are dispersed in water or a water-containing organic solvent.

Preferred examples of the resin particles include resin particles described in paragraphs 0062 to 0076 of JP2016-188345A.

As the resin particles, resin particles having negative charges are preferable from the viewpoint of aggregating properties. Specifically, the ink composition preferably contains at least one kind selected from polyester resin particles, acrylic resin particles, and urethane resin particles, and from the viewpoint of a good fixing property to the glass base material, the ink composition more preferably contains urethane resin particles.

A content of resin particles in the ink composition is not particularly limited and may be appropriately selected depending on the purpose.

Among these, from the viewpoint of image stability with the ink composition, the content of resin particles is preferably 3% by mass to 30% by mass, more preferably 5% by mass to 20% by mass, and even more preferably 5% by mass to 10% by mass, with respect to the total amount of the ink composition.

### - Water-soluble Organic Solvent-

The ink composition used in the present disclosure preferably contains at least one kind of water-soluble organic solvent. The water-soluble organic solvent can produce an effect of prevention of drying or wetting. For prevention of drying, the water-soluble organic solvent can be used as an anti-drying agent that prevents clogging caused by an aggregate formed by ink adhered and dried on an ink jetting port of an injecting nozzle, and a water-soluble organic solvent having a vapor pressure lower than that of water is preferable for prevention of drying or wetting.

A boiling point of the water-soluble organic solvent at 1 atm (1013.25 hPa) is preferably 80°C to 300°C, and more preferably 120°C to 250°C.

In a case where the water-soluble organic solvent is used as an anti-drying agent, a water-soluble organic solvent having a vapor pressure lower than that of water is preferable. Specific examples of the water-soluble organic solvent having a vapor pressure lower than that of water include polyhydric alcohols represented by ethylene glycol, propylene glycol, diethylene glycol, polyethylene glycol, thiodiglycol, dithiodiglycol, 2-methyl-1,3-propandiol, 1,2,6-hexanetriol, acetylene glycol derivatives, glycerin, trimethylolpropane, and the like.

Among these, polyhydric alcohols such as glycerin and diethylene glycol are preferable as the anti-drying agent.

In a case where the ink composition contains a water-soluble organic solvent, only one kind of water-soluble organic solvent may be contained, or two or more kinds of water-soluble organic solvents may be used in combination.

A content of the water-soluble organic solvent in a case where the ink composition contains a water-soluble organic solvent is preferably 10% by mass to 50% by mass, more preferably 15% by mass to 45% by mass, and even more preferably 20% by mass to 40% by mass, with respect to the total amount of the ink composition.

The water-soluble organic solvent may be used to adjust viscosity in addition to the above purposes. Specific examples of the water-soluble organic solvent that can be used to adjust the viscosity include alcohols (for example, methanol, ethanol, propanol, isopropanol, n-butanol, isobutanol, sec-butanol, t-butanol, pentanol, hexanol, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether); amines (for example, ethanolamine, diethanolamine, triethanolamine, N-methyl diethanolamine, N-ethyl diethanolamine, morpholine, N-ethyl morpholine, ethylenediamine, diethylenetriamine, triethylenetetramine, polyethylene imine, and tetramethyl propylenediamine); and other polar solvents (for example, formamide, N,N-dimethylformamide, N.N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone).

Even in a case where the water-soluble organic solvent is used to adjust the viscosity, the water-soluble organic solvent may be used alone or two or more kinds of the water-soluble organic solvents may be used in combination.

### -Other Additives-

The ink composition used in the present disclosure can be further constituted of other additives other than the above components. Examples of the other additives include known additives such as an anti-drying agent (wetting agent), a fading inhibitor, an emulsion stabilizer, a permeation enhancer, an ultraviolet absorber, a preservative, a fungicide, a pH adjuster, a surface tension adjuster, a defoamer, a viscosity adjuster, a dispersant, a dispersion stabilizer, a rust inhibitor, and a chelating agent.

### <Step C>

The step C is a step of heating the ink image formed on the glass base material through the steps A and B to a temperature equal to or higher than a melting temperature of glass.

By heating the ink image to a melting temperature of glass or higher, that is, more specifically, a melting temperature of glass or higher, the glass being used as the glass base material, at least an area of the glass base material is melt, and the ink image is fixed on the glass base material to obtain the decorated glass. (ln the present specification, heating in step C may be referred to as calcinating.)

In a case where the heating temperature is lower than the melting temperature of glass as the glass base material, the ink image may not be sufficiently fixed on the glass base material, and the formed image may not have necessary rub resistance.

The melting temperature of glass, which is the heating temperature, is a temperature at which glass constituting the glass base material is melted, and is appropriately determined depending on a material of the glass base material. Among these, the heating temperature is preferably 500°C or higher, more preferably 550°C or higher, and even more preferably 600°C or higher, from the viewpoint that the obtained image has more good rub resistance.

An upper limit of the heating temperature is not particularly limited, but from the viewpoint of glass handling properties, it is preferable to heat the glass base material at 1000°C or lower in a case of using soft glass such as soda glass, and it is preferable to heat the glass base material at 2000°C or lower in a case of using hard glass such as borosilicate glass.

A heating device that can be used in the step C includes known heating devices such as a heating furnace having non-contact-type heating means, a heating zone, and the like.

The above described heating temperature is a surface temperature of the glass base material during the step C. The surface temperature of the glass base material can be measured by using a non-contact thermometer such as HORIBA High precision Radiation thermometer (high temperature type) manufactured by Horiba, Ltd., which is used in a region up to 1000°C, or a portable radiation thermometer (for single-color high temperature) manufactured by AS ONE CORPORATION., which is used in a region of 1000°C or higher.

The decoration method according to the embodiment of the present disclosure may further include any steps in addition to the above step A, step B, and step C. Any steps include, for example, a drying step which is performed as desired in at least one of between the step A and the step B or between the step B and the step C.

According to the decoration method of the embodiment of the present invention, it is possible to obtain a decorated glass in which an image having good color tones and wear resistance can be formed on any glass base material, and generation of turbidity in the glass base material obtained after the image being heated and fixed is suppressed, and is used in a wide range of applications.

### <Decorated Glass>

The decorated glass which can be produced according to the method according to the present invention includes, in the following order: a lower layer formed on a glass base material by using an ink aggregating agent-containing composition having a content of elements other than carbon, oxygen, nitrogen, fluorine, and hydrogen of 1.0% by mass or less; and an image containing an inorganic pigment, in which a difference in visible light transmittance between a region having the lower layer and a region having no lower layer in the glass base material is less than 1%.

Fig. 1 is a schematic cross-sectional view showing an example of the decorated glass obtained by the above described decoration method according to the embodiment of the present invention.

As shown in Fig. 1, the decorated glass 10 includes a glass base material 12, a lower layer 14 formed by using the above described aggregating liquid, and an ink image 16 formed by an ink composition in this order.

In the decorated glass 10, the content of elements other than C, O, N, F, and H contained in the lower layer 14 is 1.0% by mass or less, so that the glass base material 12 is hardly affected by components contained in the lower layer 14. Therefore, the image 16 formed by calcination has excellent color reproducibility and rub resistance, turbidity of the glass base material and turbidity on the ink image, which occur with calcination, are suppressed from being generated.

Thus, the decorated glass is excellent in design and is used in a wide range of applications. Examples

Hereinafter, the decoration method according to the embodiment of the present invention will be specifically described with reference to Examples. The decoration method according to the embodiment of the present invention is not limited to examples shown in the following Examples, and can be appropriately modified and implemented within the scope of the appended claims.

In the following Examples and Comparative Examples, "%" and "parts" are on a mass basis unless otherwise specified.

### <1. Preparation of Ink Composition>

### -Ink Composition Containing Urethane Resin Particles-

### (Preparation of yellow ink Ex1Y)

A solution obtained by mixing the following components (compositions) was stirred for 20 minutes by using a mixer (L4R manufactured by Silverson Machines Ltd.) at room temperature at 5,000 rpm to prepare yellow ink Ex1Y.

A viscosity of the prepared yellow ink ExlY was measured using VISCOMETER TV-22 (manufactured by TORI SANGYO CO., LTD.) and was 6 mPa·s at 30°C.

A surface tension of the prepared yellow ink ExlY was measured using Automatic Surface Tensiometer CBVP-Z (manufactured by Kyowa interface Science Co., Ltd.) and was 38 mN/m at 25°C.

Viscosities and surface tensions of other ink compositions described later were also measured by the same method as that of Ex1Y.

### (Composition of yellow ink Ex1Y)

| | |
|---|---|
| • Yellow 259 (inorganic pigment) | 6.4 parts |
| • WBR2101 (trade name: Urethane latex manufactured by Taisei Fine Chemical Co., Ltd., solid contents of 26%) | 30.8 parts |
| • Propylene glycol | 30 parts |
| • CAPSTONE (registered trademark) FS-63 (Surfactant. manufactured by E.I. du Pont de Nemours and Company) | 0.01 parts |
| • Ion exchange water | Residue |

| | |
|---|---|
| ("Residue" means balance in a case where a total amount of the composition is 100 parts. The same applies to the following compositions.) | |

### (Composition of magenta ink Ex1M)

| | |
|---|---|
| • Magenta 307 (inorganic pigment) | 16.4 parts |
| • WBR2101 (trade name: Urethane latex manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Composition of cyan ink Ex1C)

| | |
|---|---|
| • Cyan 561 (inorganic pigment) | 8.65 parts |
| • WBR2101 (trade name: Urethane latex manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Composition of black ink Ex1Bk)

| | |
|---|---|
| • Black 980 (inorganic pigment) | 8.05 parts |
| • WBR2101 (trade name: Urethane latex manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### -Ink Composition Containing Acrylic Resin Particles-

### 1. Synthesis of self-dispersing polymer particles P-1 (resin particles)

360.0 g of methyl ethyl ketone was put into a 2L three-neck flask provided with a stirrer, a thermometer, a reflux cooling pipe, and a nitrogen gas introduction pipe, and then heated to 75°C. Thereafter, a mixed solution was prepared by mixing 72.0 g of isobornyl methacrylate, 252.0 g of methyl methacrylate, 36.0 g of methacrylic acid, 72 g of methyl ethyl ketone, and 1.44 g of "V-601" (polymerization initiator, manufactured by FUJIFILM Wal<o Pure Chemical Corporation, compound name: (dimethyl 2,2'-azobis(2-methylpropionate)) in another container.

The mixed solution prepared in the above described manner was added dropwise at a constant speed such that the dropwise addition was completed for 2 hours while the temperature in the flask into which methyl ethyl ketone was put was maintained to 75°C. A solution formed of 0.72 g of "V-601" and 36.0 g of methyl ethyl ketone was added thereto after the dropwise addition was completed, and a solution formed of 0.72 g of "V-601" and 36.0 g of isopropanol was added thereto after the solution was stirred at 75°C for 2 hours, and the solution was stirred at 75°C for 2 hours. Thereafter, the solution was heated to 85°C and continuously stirred for 2 hours, thereby obtaining a polymer solution of an isobornyl methacrylate/methyl methacrylatelmethacrylic acid (=20/70/10 [mass ratio]) copolymer.

The weight-average molecular weight (Mw) of the obtained copolymer was measured according to the following method, and the value thereof was 60,000. In addition, the acid value of the obtained copolymer was measured according to the following method, and the value thereof was 64.9 mgKOH/g.

### -Measurement of Weight-average Molecular Weight-

The weight-average molecular weight was measured by gel permeation chromatography (GPC).

The GPC was performed using HLC-8020GPC (manufactured by TOSOH CORPORATION), three columns of TSKgel (registered trademark), and Super Multipore HZ-H (manufactured by TOSOH CORPORATION, 4.6 mmID_{×}15 cm), and tetrahydrofuran (THF) as an eluent.

In addition, the GPC is performed at a sample concentration of 0.45% by mass, a flow rate of 0.35 ml/min, a sample injection volume of 10 µl, and a measurement temperature of 40°C using an RI detector.

The calibration curve was prepared using 8 samples of "F-40", "F-20", "F-4", "F-1", "A-5000", "A-2500", "A-1000". and "n-propylbenzene" which are "Standard Samples TSK standard, polystyrene" (manufactured by TOSOH CORPORATION).

### -Measurement of Acid Value-

The acid value is represented by the number of moles of potassium hydroxide necessary for neutralizing 1 gram (g) of resin particles, and a value obtained using a measurement method in accordance with JIS Standard (JIS K 0070:1992).

Next, 668.3 g of the obtained polymer solution was weighed, 388.3 g of isopropanol and 145.7 ml of a 1 mol/L sodium hydroxide aqueous solution were added to the solution, and the temperature in a reaction container was increased to 80°C. Thereafter, 720.1 g of distilled water was added dropwise thereto at a speed of 20 ml/min and dispersed in the solution, and the temperature in the reaction container was maintained at 80°C for 2 hours, 85°C for 2 hours, and then 90°C for 2 hours under atmospheric pressure. Thereafter, the pressure inside the reaction container was reduced, and a total amount of 913.7 g of isopropanol, methyl ethyl ketone, and distilled water were distilled off, thereby obtaining an aqueous dispersion of self-dispersing polymer particles P-1 (resin particles) having a concentration of solid contents (concentration of polymer particles) of 28.0% by mass.

The glass transition temperature (Tg) of the self-dispersing polymer particles P-1 was measured according to the following method, and the temperature was 145°C.

### -Measurement of Glass Transition Temperature (Tg)-

The aqueous dispersion of self-dispersing polymer particles having a solid content of 0.5 g was dried under reduced pressure at 50°C for 4 hours to obtain polymer solid content. Tg of the obtained polymer solid contents was measured using a differential scanning calorimeter (DSC) EXSTAR 6220 manufactured by Hitachi High-Tech Science Corporation. Specifically, 5 mg of the polymer solid content was sealed in an aluminum pan, the temperature of the polymer solid content was changed according to the following temperature profile in a nitrogen atmosphere, and the Tg was obtained based on the measurement data in a case where the temperature was secondly heated. No melting point was observed within the following temperature profile range.

### -Temperature Profile in Tg Measurement of Resin Particles-

| | |
|---|---|
| 30°C | -50°C (cooled at 50°C/min) |
| -50°C | 220°C (temperature rise at 20°C/min) |
| 220°C | -50°C (cooled at 50°C/min) |
| -50°C | 220°C (temperature rise at 20°C/min) |

An ink composition containing acrylic resin particles was prepared in the same manner as the ink composition containing urethane resin particles according to a composition shown below, using the polymer particles P-1 that were the acrylic resin particles prepared above.

### (Composition of Yellow Ink Ex2Y)

| | |
|---|---|
| Yellow 259 (inorganic pigment) | 6.4 parts |
| Polymer particles P-1 (particles prepared as described above) | 28.6 parts |
| Propylene glycol | 30 parts |
| CAPSTONE (registered trademark) FS-63 | 0.01 parts |
| (Surfactant, manufactured by E.I. du Pont de Nemours and Company) | |
| • Ion exchange water | Residue |

### (Composition of magenta Ink Ex2M)

| | |
|---|---|
| • Magenta 307 (inorganic pigment) | 16.4 parts |
| • Polymer particles P-1 (particles prepared as described above) | 28.6 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Composition of cyan ink Ex2C)

| | |
|---|---|
| • Cyan 561 (inorganic pigment) | 8.65 parts |
| • Polymer particles P-1 (particles prepared as described above) | 28.6 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of black Ink Ex2Bk)

| | |
|---|---|
| • Black 980 (inorganic pigment) | 8.05 parts |
| • Polymer particles P-1 (particles prepared as described above) | 28.6 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### -Ink Composition Containing Polyester Resin Particles-

According to a composition shown below, an ink composition containing polyester resin particles was prepared in the same manner as the ink composition containing urethane resin particles, using PESRESIN A-520 (trade name, manufactured by TAKAMATSU CONSTRUCTION GROUP CO., LTD.) that is polyester resin particles.

### (Preparation of yellow Ink Ex3Y)

| | |
|---|---|
| • Yellow 259 (inorganic pigment) | 6.4 parts |
| • Polyester resin particles (PESRESIN A-520: trade name, solid contents of 30%, manufactured by TAKAMATSU CONSTRUCTION GROUP CO., LTD. | 26.7 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Composition of magenta Ink Ex3M)

| | |
|---|---|
| • Magenta 307 (inorganic pigment) | 16.4 parts |
| • Polyester resin particles (PESRESIN A-520: trade name, solid contents of 30%, manufactured by TAKAMATSU CONSTRUCTION GROUP CO., LTD. | 26.7 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of cyan ink Ex3C)

| | |
|---|---|
| • Cyan 561 (inorganic pigment) | 8.65 parts |
| • Polyester resin particles (PESRESIN A-520: trade name, solid contents of 30%, manufactured by TAKAMATSU CONSTRUCTION GROUP CO., LTD. | 26.7 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of black Ink Ex3Bk)

| | |
|---|---|
| • Blacl< 980 (inorganic pigment) | 8.05 parts |
| • Polyester resin particles (PESRESIN A-520: trade name, solid contents of 30%, manufactured by TAKAMATSU CONSTRUCTION GROUP CO., LTD. | 26.7 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### -Preparation of Comparative Ink Composition-

According to a composition shown below, a comparative ink composition was prepared in the same manner as the ink composition containing urethane resin particles.

### (Composition of comparative yellow ink Co1Y)

| | |
|---|---|
| • Projet Yellow APD 1000 (organic pigment), manufactured by FUJIFILM Imaging Colorants Limited, pigment concentration of 14% by mass | 25 parts |
| • WBR2101 (Urethane latex, manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of comparative magenta ink Co1M)

| | |
|---|---|
| • Projet Magenta APD 1000 (organic pigment), manufactured by FUJIFILM Imaging Colorants Limited, pigment concentration of 14% by mass | 40 parts |
| • WBR2101 (Urethane latex, manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of comparative cyan ink Co1C)

| | |
|---|---|
| • Projet Cyan APD 1000 (organic pigment), manufactured by FUJIFILM Imaging Colorants Limited, pigment concentration of 14% by mass | 18 parts |
| • WBR2101 (Urethane latex, manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of black ink Co1Bk)

| | |
|---|---|
| • Projet Magenta APD 1000, (carbon black), | |
| manufactured by FUJIFILM Imaging Colorants Limited, pigment concentration of 14% by mass | 21 parts |
| • WBR2101 (Urethane latex, manufactured by Taisei Fine Chemical Co., Ltd., solid contents of 26%) | 30.8 parts |
| • Propylene glycol | 30 parts |
| • CAPSTONE (registered trademark) FS-63 (Surfactant, manufactured by E.I. du Pont de Nemours and Company) | 0.01 parts |
| • Ion exchange water | Residue |

### (Preparation of aggregating liquid Ex1P)

A solution in which respective components described in the following composition were mixed was stirred for 20 minutes by using a mixer (L4R manufactured by Silverson Machines Ltd.) at room temperature at 5,000 rpm to prepare an aggregating liquid Ex1P.

A viscosity of the prepared aggregating liquid Ex1P was measured using VISCOMETER TV-22 (manufactured by TOKI SANGYO CO., LTD.) and was 4 mPa·s at 30°C.

A surface tension of the prepared aggregating liquid was measured using Automatic Surface Tensiometer CBVP-Z (manufactured by Kyowa interface Science Co., Ltd.) and was 25 mN/m at 25°C.

It was confirmed by Optima 7300DV (ICP-OES, Inductively Coupled Plasma Optical Emission Spectrophotometry) manufactured by Perkin Elmer Inc. that atoms other than carbon, oxygen, nitrogen, fluorine, and hydrogen were not detected in the aggregating liquid Ex1P.

Furthermore, as an analyzer, Element II (ICP-MS, Inductively Coupled Plasma Mass Spectrophotometry) manufactured by Thermo Fisher Scientific Solutions LLC was used to analyze the aggregating liquid Ex1P; however, no atoms other than carbon, oxygen, nitrogen, fluorine, and hydrogen were detected.

Therefore, it was confirmed that the aggregating liquid Ex1P contains no atoms other than carbon, oxygen, nitrogen, fluorine, and hydrogen, or the amount thereof is the detection limit amount or lower, even though atoms other than carbon, oxygen, nitrogen, fluorine, and hydrogen were contained.

### (Composition of aggregating liquid Ex1P)

| | |
|---|---|
| • Ricacid TCR-100 (1,2,3-propanetricarboxylic acid) (organic acid) | 2.0 parts |
| • Malonic acid | 9.0 parts |
| • Malic acid | 8.0 parts |
| • Citric acid | 7.0 parts |
| • Propylene glycol | 20.0 parts |
| • Surflon S-243 (trade name: fluorine-based surfactant, AGC Seimi Chemical Co., Ltd.) | 0.3 parts |
| • Ion exchange water | Residue |

### (Preparation of aggregating liquid Ex2P)

An aggregating liquid Ex2P was prepared in the same manner as the preparation of the aggregating liquid Ex1P. A composition of the aggregating liquid Ex2P is as follows.

### (Composition of aggregating liquid Ex2P)

| | |
|---|---|
| • Phosphoric acid | 0.32 parts |
| • Ricacid TCR-100 (1,2,3-propanetricarboxylic acid) (organic acid) | 2.0 parts |
| • Malonic acid | 9.0 parts |
| • Malic acid | 8.0 parts |
| • Citric acid | 7.0 parts |
| • Propylene glycol | 20.0 parts |
| • Surflon S-243 (trade name: fluorine-based surfactant, AGC Seimi Chemical Co., Ltd.) | 0.3 parts |
| • Ion exchange water | Residue |

Physical properties of the aggregating liquid Ex2P were measured in the same manner as the aggregating liquid Ex1P.

As a result, a viscosity of the aggregating liquid Ex2P was 4 mPa s at 30°C. A surface tension thereof was 25 mN/m at 25°C.

As a result of analyzing the aggregating liquid Ex2P by Optima 7300DV manufactured by Perkin Elmer Inc., a ratio of atoms other than carbon, oxygen, nitrogen, fluorine, and hydrogen contained in the aggregating liquid Ex2P was 0.1% by mass with respect to a total solid content.

### (Preparation of aggregating liquid Ex3P)

An aggregating liquid Ex3P was prepared in the same manner as the aggregating liquid Ex1P. A composition of the aggregating liquid Ex3P is as follows.

### (Composition of aggregating liquid Ex3P)

| | |
|---|---|
| • Ricacid TCR-100 (1,2,3-propanetricarboxylic acid) | |
| (organic acid) | 2.0 parts |
| • Malonic acid | 9.0 parts |
| • Malic acid | 8.0 parts |
| • Citric acid | 7.0 parts |
| • Propylene glycol | 20.0 parts |
| • Surfynol A104A (Acetylene glycol-based nonionic surfactant, Nissin Chemical Industry Co., Ltd.) | 0.1 part |
| • Ion exchange water | Residue |

Physical properties of the aggregating liquid Ex3P were measured in the same manner as the aggregating liquid Ex1P.

As a result, a viscosity of the aggregating liquid Ex3P was 4 mPa s at 30°C. A surface tension thereof was 35 mN/m at 25°C.

As a result of analyzing the aggregating liquid Ex3P by Optima 7300DV manufactured by Perkin Elmer Inc., no atoms other than carbon, oxygen, nitrogen, fluorine, and hydrogen contained in the aggregating liquid Ex3P was detected. In addition, the aggregating liquid Ex3P was analyzed using Element II manufactured by Thermo Fisher Scientific Solutions LLC, but similarly, no atoms other than carbon, oxygen, nitrogen, fluorine, and hydrogen were detected.

### (Preparation of aggregating liquid Ex4P)

An aggregating liquid Ex4P was prepared in the same manner as the aggregating liquid Ex1P. A composition of the aggregating liquid Ex3P is as follows.

### (Composition of aggregating liquid Ex4P)

| | |
|---|---|
| • Ricacid TCR-100 (1 ,2,3-propanetricarboxylic acid) (organic acid) | 2.0 parts |
| • Malonic acid | 9.0 parts |
| • Malic acid | 8.0 parts |
| • Citric acid | 7.0 parts |
| • Propylene glycol | 20.0 parts |
| • Ion exchange water | Residue |

Physical properties of the aggregating liquid Ex4P were measured in the same manner as the aggregating liquid Ex1P.

As a result, a viscosity of the aggregating liquid Ex4P was 4 mPa s at 30°C. A surface tension thereof was 29 mN/m at 25°C.

As a result of analyzing the aggregating liquid Ex4P by Optima 7300DV manufactured by Perkin Elmer Inc., no atoms other than carbon, oxygen, nitrogen, fluorine, and hydrogen contained in the aggregating liquid Ex4P was detected. In addition, the aggregating liquid Ex4P was analyzed using Element 11 manufactured by Thermo Fisher Scientific Solutions LLC, but similarly, no atoms other than carbon, oxygen, nitrogen, fluorine, and hydrogen were detected.

### (Preparation of aggregating liquid Ex5P)

An aggregating liquid Ex5P was prepared in the same manner as the aggregating liquid Ex1P. A composition of the aggregating liquid Ex5P is as follows.

### (Composition of aggregating liquid Ex5P)

| | |
|---|---|
| • Sharol (registered trademark) DC303P, manufactured by Dai-ichi Kogyo Seiyaku Co., Ltd., cationic polymer aggregating agent | 4 parts |
| • Propylene glycol | 20 parts |
| • Surflon S-243 (trade name: fluorine-based surfactant, AGC Seimi Chemical Co.. Ltd.) | 0.3 parts |
| • Ion exchange water | Residue |

Physical properties of the aggregating liquid Ex5P were measured in the same manner as the aggregating liquid Ex1P.

As a result, a viscosity of the aggregating liquid Ex5P was 4 mPa s at 30°C. A surface tension thereof was 29 mN/m at 25°C.

As a result of analyzing the aggregating liquid Ex5P by Optima 7300DV manufactured by Perkin Elmer Inc., no atoms other than carbon, oxygen, nitrogen, fluorine, and hydrogen contained in the aggregating liquid Ex5P was detected. In addition, the aggregating liquid Ex5P was analyzed using Element II manufactured by Thermo Fisher Scientific Solutions LLC, but similarly, no atoms other than carbon, oxygen, nitrogen, fluorine, and hydrogen were detected.

### (Composition of aggregating liquid Ex6P)

| | |
|---|---|
| • Phosphoric acid | 3.2 parts |
| • Ricacid TCR-100 (1 ,2,3-propanetricarboxylic acid) (organic acid) | 2.0 parts |
| • Malonic acid | 9.0 parts |
| • Malic acid | 8.0 parts |
| • Citric acid | 7.0 parts |
| • Propylene glycol | 20.0 parts |
| • Surfion S-243 (trade name: fluorine-based surfactant. AGC Seimi Chemical Co., Ltd.) | 0.3 parts |
| • Ion exchange water | Residue |

Physical properties of the aggregating liquid Ex6P were measured in the same manner as the aggregating liquid Ex1P.

As a result, a viscosity of the aggregating liquid Ex6P was 4 mPa s at 30°C. A surface tension thereof was 25 mN/m at 25°C.

As a result of analyzing the aggregating liquid Ex2P by Optima 7300DV manufactured by Perkin Elmer Inc., a ratio of atoms other than carbon, oxygen, nitrogen, fluorine, and hydrogen contained in the aggregating liquid Ex6P was 1% by mass with respect to a total solid content.

### (Preparation of comparative aggregating agent liquid Co1P)

A comparative aggregating liquid Co1P was prepared in the same manner as the aggregating liquid Ex1P. A composition of the comparative aggregating liquid Co1P is as follows.

### (Composition of comparative aggregating liquid Co1P)

| | |
|---|---|
| • Phosphoric acid (aggregating agent) | 4.8 parts |
| • Ricacid TCR-100 (1,2,3-propanetricarboxylic acid) (organic acid) | 2.0 parts |
| • Malonic acid | 7.0 parts |
| • Malic acid | 6.0 parts |
| • Propylene glycol | 20.0 parts |
| • Surflon S-243 (trade name: fluorine-based surfactant, AGC Seimi Chemical Co., Ltd.) | 0.3 parts |
| • Ion exchange water | Residue |

Physical properties of the comparative aggregating liquid Co1P were measured in the same manner as the aggregating liquid Ex1P.

As a result, a viscosity of the comparative aggregating liquid Co1P was 4 mPa·s at 30°C. A surface tension thereof was 25 mN/m at 25°C.

As a result of analyzing the comparative aggregating liquid Co1P by Optima 7300DV manufactured by Perkin Elmer Inc., a ratio of atoms other than carbon, oxygen, nitrogen, fluorine, and hydrogen contained in the comparative aggregating liquid Co1P was 1.5% by mass with respect to a total solid content.

### (Preparation of Comparative aggregating agent liquid Co2P)

A comparative aggregating liquid Co2P was prepared in the same manner as the aggregating liquid Ex1P. A composition of the comparative aggregating liquid Co2P is as follows.

### (Composition of comparative aggregating liquid Co2P)

| | |
|---|---|
| • Phosphoric acid (aggregating agent) | 9.6 parts |
| • Ricacid TCR- 100 (1,2,3-propanetricarboxylic acid) (organic acid) | 2.0 parts |
| • Malonic acid | 5.0 parts |
| • Malic acid | 4.0 parts |
| • Propylene glycol | 20.0 parts |
| • Surflon S-243 (trade name: fluorine-based surfactant, AGC Seimi Chemical Co., Ltd.) | 0.3 parts |
| • Ion exchange water | Residue |

Physical properties of the comparative aggregating liquid Co2P were measured in the same manner as the aggregating liquid Ex1P.

As a result, a viscosity of the comparative aggregating liquid Co2P was 4 mPa·s at 30°C. A surface tension thereof was 25 mN/m at 25°C.

As a result of analyzing the comparative aggregating liquid Co2P by Optima 7300DV manufactured by Perkin Elmer Inc., a ratio of atoms other than carbon, oxygen, nitrogen, fluorine, and hydrogen contained in the comparative aggregating liquid Co2P was 3.0% by mass with respect to a total solid content.

### (Preparation of comparative aggregating agent liquid Co3P)

A comparative aggregating liquid Co3P was prepared in the same manner as the aggregating liquid fix1P. A composition of the comparative aggregating liquid Co3P is as follows.

### (Composition of comparative aggregating liquid Co3P)

| | |
|---|---|
| • Calcium chloride (aggregating agent) | 20.0 parts |
| • Propylene glycol | 20.0 parts |
| • Surflon S-243 (trade name: fluorine-based surfactant, | |
| AGC Seimi Chemical Co.. Ltd.) | 0.3 parts |
| • Ion exchange water | Residue |

Physical properties of the comparative aggregating liquid Co3P were measured in the same manner as the aggregating liquid Ex1P.

As a result, a viscosity of the comparative aggregating liquid Co3P was 4 mPa·s at 30°C. A surface tension thereof was 25 mN/m at 25°C.

As a result of analyzing the comparative aggregating liquid Co3P by Optima 7300DV manufactured by Perkin Elmer Inc., a ratio of atoms other than carbon, oxygen, nitrogen, fluorine, and hydrogen contained in the comparative aggregating liquid Co3P was 8.2% by mass with respect to a total solid content.

### [Example 1]

### <Formation 1 of Ink Image by Ink Jet Method>

As the glass base material, ordinary plate glass (kind of glass is soda lime) that is manufactured by Sekiya Rika Co., Ltd. and that has a softening point of 730°C was prepared.

The aggregating liquid Ex1P was applied onto the glass base material by an ink jet method using DMP-2831 printer manufactured by FUJIFILM Dimatix, Inc.. The region where was the aggregating liquid Ex1P was applied is an area of 20 cm × 20 cm. (Step A)

Respective ink compositions for forming an image were applied with a head capable of obtaining a jetting amount of 10 pl (picoliter) at an image resolution of 1200 dpi (dot per inch (2.54 cm)) × 1200 dpi.

As the ink compositions, respective ink compositions prepared by the method described above were used depending on combinations described in the following table.

First, an image having the following colors was drawn on the glass base material to which the aggregating liquid Ex]1P was applied in the step A with respective ink compositions of the yellow ink Ex1Y, the magenta ink Ex1M, the cyan ink Ex1C, and the black ink Ex1Bk using DMP-2831 printer manufactured by FUJIFILM Dimatix, Inc. in a range of 5 cm × 5 cm.

Each of the ink compositions may be used alone or two or more of ink compositions may be used in combination, thereby forming a cyan (C) image, magenta (M) image, yellow (Y) image, black (K) image, blue (B) image, green (G) image, red (R) image, three-color black (3C: C + Y + M) image, and four-color black (4C: C + Y + M + K) image, respectively.

For evaluating an area on which the ink image was not formed (non-image area) of the ink image, a region was prepared in which only the aggregating liquid was applied and no ink composition was applied.

In addition, in order to evaluate image quality, a continuous line image was drawn by using 5 nozzles at an image resolution of 1200 dpi × 1200 dpi. (Step B)

The ink composition is applied, and then the ink composition (ink image) was dried with hot air at 80°C using a dryer.

The image is formed by the ink composition, and then the glass base material on which the aggregating liquid and the ink composition were applied was heated in an oven at 730°C for 1 hour and was calcinated to obtain a decorated glass. (Step C)

### [Comparative Example 1]

### <Formation 2 of Ink Image by ink Jet Method>

A decorated glass of Comparative Example 1 was obtained in the same manner as in Example 1 except that heating at 730°C and calcination in the step C in Example 1 were not performed. (Without performing step C)

### [Comparative Example 2]

### <Formation 3 of Ink image by Ink Jet Method>

A decorated glass of Comparative Example 2 was obtained in the same manner as in Example 1 except that heating is performed in the oven at 300°C instead of performing heating at 730°C and calcination in Step C in Example 1. (Performing step C at low temperature)

### [Comparative Example 3]

### <Formation 4 of Ink Image by Ink Jet Method>

A decorated glass of Comparative Example 2 was obtained in the same manner as in Example 1 except that the step A of applying the aggregating liquid Ex1P in Example 1 was not performed. (Without performing step A)

### [Comparative Example 4]

### <Formation 5 of Ink Image by ink Jet Method>

A decorated glass of Comparative Example 3 was obtained in the same manner as in Example 1 except that the step A of applying the aggregating liquid Ex1P, and heating at 730°C and calcination in the step C in Example 1 were not performed. (Without performing step A and step C)

### [Comparative Example 5]

### <Formation 6 of Ink Image by Ink Jet Method>

A decorated glass of Comparative Example 4 was obtained in the same manner as in Example 1 except that the comparative ink compositions of Co1Y, Co 1M, Co1C, and Co1 Bk were used instead of respective ink compositions of Ex1Y, Ex1M, Ex1C, and Ex1Bk, which were used in Example 1.

### [Comparative Example 6]

### <Formation 7 of ink image by ink Jet Method>

A decorated glass of Comparative Example 5 was obtained in the same manner as in Comparative Example 1 except that the comparative ink compositions of Co1Y. Co1M, Co1 C, and Co1Bk were used instead of respective ink compositions of Ex1Y, Ex1M, Ex1C, and Ex1Bk, which were used in Comparative Example 1. (Without performing step C)

### [Comparative Example 7]

### <Formation 8 of Ink Image by Ink Jet Method>

A decorated glass of Comparative Example 6 was obtained in the same manner as in Comparative Example 3 except that the comparative ink compositions of Co1Y. Co1M, Co 1C, and Co1Bk were used instead of respective ink compositions of Ex1Y, ExIM, Ex1C, and Ex1 Bk, which were used in Comparative Example 3. (Without performing step A)

### [Comparative Example 8]

### <Formation 9 of Ink Image by Ink Jet Method>

A decorated glass of Comparative Example 7 was obtained in the same manner as in Comparative Example 4 except that the comparative ink compositions of Co1Y, Co1M, Co1C, and Co1Bk were used instead of respective ink compositions of Ex1Y, Ex1M, Ex1C, and Ex1Bk, which were used in Comparative Example 4. (Without performing step A and step C)

### [Example 2]

### <Formation 10 of ink Image by Ink Jet Method>

A decorated glass of Example 2 was obtained in the same manner as in Example 1 except that the aggregating liquid Ex2P was used instead of the aggregating liquid Ex1P used in Example 1.

### [Example 3]

### <Formation 11 of Ink Image by Ink Jet Method>

A decorated glass of Example 3 was obtained in the same manner as in Example 1 except that the aggregating liquid Ex3P was used instead of the aggregating liquid Ex1P used in Example 1.

### [Example 4]

### <Formation 12 of Ink Image by Ink Jet Method>

A decorated glass of Example 4 was obtained in the same manner as in Example 1 except that the aggregating liquid Ex4P was used instead of the aggregating liquid Ex1P used in Example 1.

### [Example 5]

### <Formation 13 of Ink image by ink Jet Method>

A decorated glass of Example 5 was obtained in the same manner as in Example 1 except that the aggregating liquid Ex5P was used instead of the aggregating liquid Ex1P used in Example 1.

### [Comparative Example 9]

### <Formation 14 of Ink Image by Ink Jet Method>

A decorated glass of Comparative Example 9 was obtained in the same manner as in Example 1 except that the comparative aggregating liquid Co1P was used instead of the aggregating liquid Ex1P used in Example 1.

### [Comparative Example 10]

### <Formation 15 of Ink Image by Ink Jet Method>

A decorated glass of Comparative Example 10 was obtained in the same manner as in Example 1 except that the comparative aggregating liquid Co2P was used instead of the aggregating liquid Ex1P used in Example 1.

### [Comparative Example 11]

### <Formation 16 of Ink Image by Ink Jet Method>

A decorated glass of Comparative Example 10 was obtained in the same manner as in Example 1 except that the comparative aggregating liquid Co3P was used instead of the aggregating liquid Ex1P used in Example 1.

### [Evaluation of Decorated Glass]

The decorated glasses produced by the methods of decorating glass in Examples and Comparative Examples were evaluated by the following method.

Regarding Comparative Example 5 and Comparative Example 7 using the comparative ink compositions, the color of the ink image initially formed disappeared due to heating at 730°C, and thus evaluation could not be performed. In Table 1 and Table 2 below, "--" denotes that the components were not included, and "*" denotes that the evaluation could not be performed.

### (1. Image quality evaluation)

Uniformity of the drawn line was used as an index for the image quality. The uniformity of the line was evaluated based on quality of the line image. Ruggedness of the line (deviation of the obtained line image edge from the ideal edge obtained by the least square method) was measured for the obtained line image with a dot analyzer (DA6000 manufactured by Oji Scientific Instruments), which is an image evaluation system, to perform the following evaluation in accordance with the evaluation standard. As for the quality of the line image, A or B is preferable, and A is more preferable.

### (Evaluation standard)

A: Ruggedness is less than 2.0.
B: Ruggedness is 2.0 or more and less than 4.0.
C: Ruggedness is 4.0 or more and less than 6.0.
D: Ruggedness is 6.0 or more and less than 8.0.
E: Ruggedness is 8.0 or more.

### (2. Rub resistance (wear resistance))

According to Gakushin-type test, Gakushin test was carried out with a weight of 500 g, and evaluated in accordance with the following evaluation standard. As for the rub resistance, A and B are at a level at which there are no practical problems, and A is preferable.

### (Evaluation standard)

A: There is no color transfer to cloth and there is no change in density in the sample.
B: A slight color transfer is observed on cloth (less than 0.05 in terms of density), but there is no change in density in the sample.
C: A color transfer is observed on cloth (0.05 or more in terms of density), but there is no change in density in the sample.
D: A color transfer is observed on cloth, and color density in the sample is being decreased (by less than 0.1).
E: A color transfer is observed on cloth, and color density in the sample is being decreased (by 0.1 or more).

### (3. Light resistance)

By using Super xenon weather meter SX75 manufactured by Suga Test Instruments Co., Ltd., and a xenon Xe lamp, light irradiation is performed for 1 month at an exposure amount of 180 W/m², and color density of the image before and after performing light irradiation was measured with spectrodensitometer FD-7 manufactured by Konica Minolta, Inc., and color change in the image before and after performing light irradiation were evaluated in accordance with the following standard. As for the light resistance, A and B are at a level at which there are no practical problems, and A is preferable.

### (Evaluation standard)

A: There was no change in color density at all.
B: Color change of less than 5% was observed.
C: Color change of 5% or more and less than 10% was observed.
D: Color change of 10% or more and less than 20% was observed.
E: Color change of 20% or more was observed.

### (4. Change in transmittance of non-image area)

The turbidity of the glass base material after being heated and fixed was evaluated by change in transmittance of the non-image area. In the glass after calcination, only the aggregating liquid used for the non-image area evaluation was applied, and a light transmittance in a region where no ink composition is applied, and a light-transmitting property of the glass base material to which no aggregating liquid is applied were measured respectively to evaluate the change in transmittance in accordance with the following standard.

The transmittances were measured using an ultraviolet-visible-near infrared spectrophotometer V570 (manufactured by JASCO Corporation). The change in the transmittance was a difference in the absolute value of the transmittance between an area where the aggregating liquid is applied and an area where no aggregating liquid is applied, and were evaluated in accordance with the following standard. As for the change in the transmittance, A, B, and B are at a level at which there are no practical problems, and A is preferable.
A: There is no difference in the transmittance between the area where the aggregating liquid is applied and the area where no aggregating liquid is applied.
B: A difference in the transmittance between the area where the aggregating liquid is applied and the area where no aggregating liquid is applied is less than 0.5%.
B : A difference in the transmittance between the area where the aggregating liquid is applied and the area where no aggregating liquid is applied is 0.5% or more and less than 1%.
C: A difference in the transmittance between the area where the aggregating liquid is applied and the area where no aggregating liquid is applied is 1% or more and less than 5%.
D: A difference in the transmittance between the area where the aggregating liquid is applied and the area where no aggregating liquid is applied is 5% or more and less than 10%.
E: A difference in the transmittance between the area where the aggregating liquid is applied and the area where no aggregating liquid is applied is 10% or more.

The evaluation results are shown in Table 1 and Table 2 below.

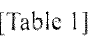

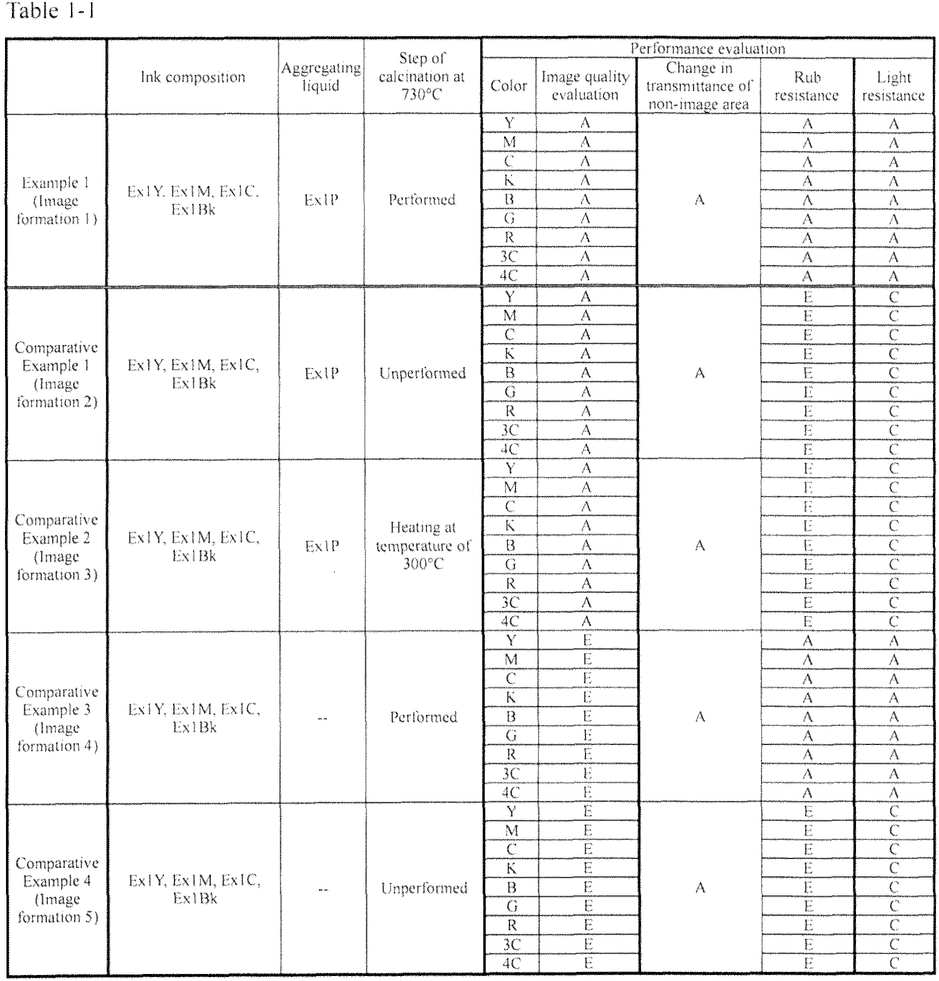

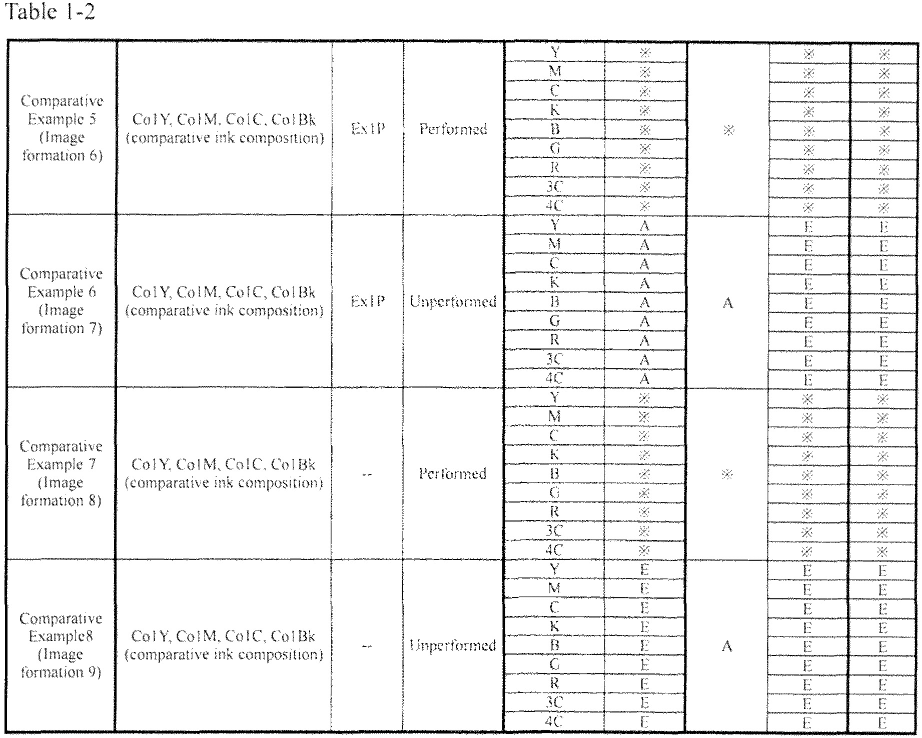

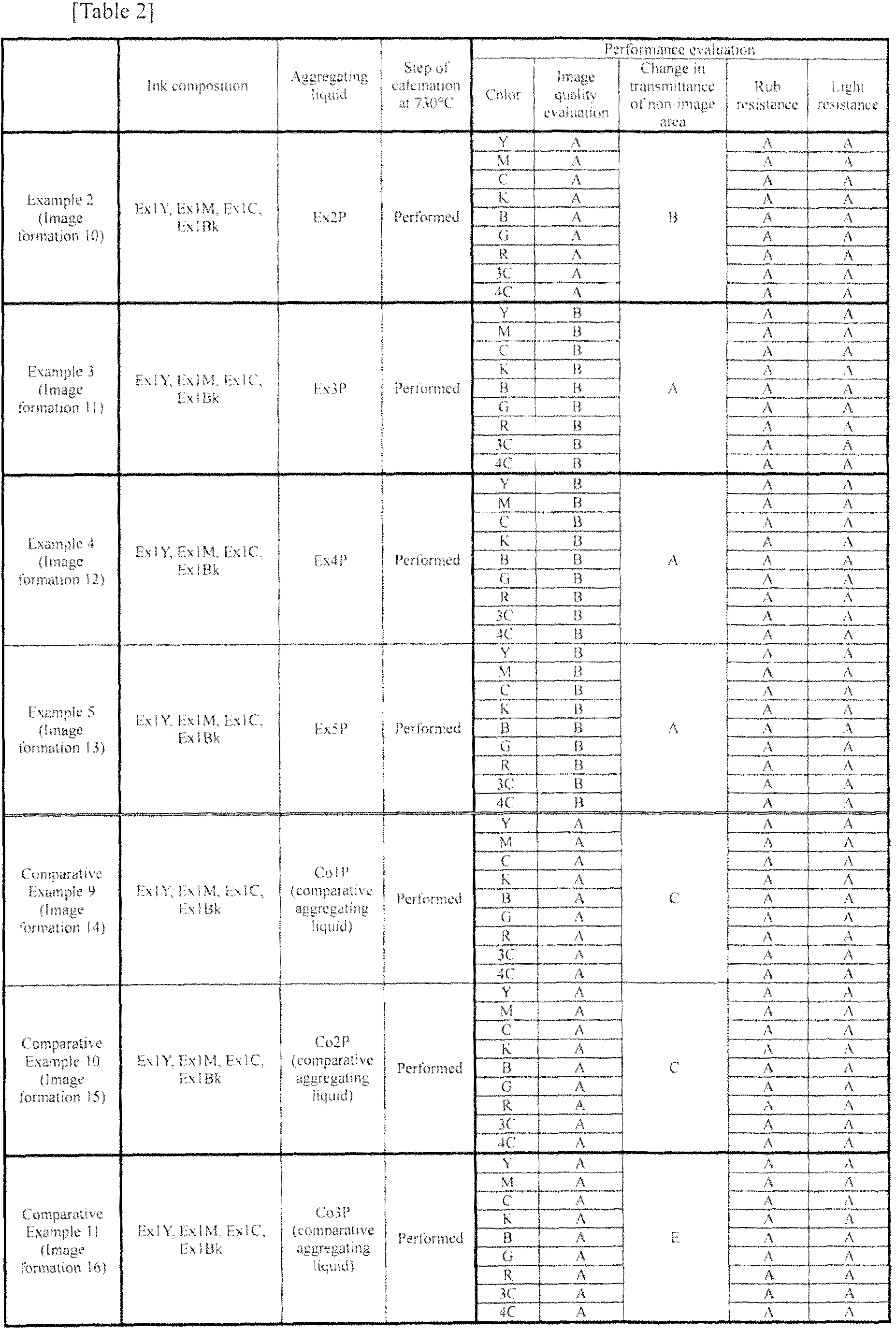

From the results of Table 1 and Table 2, it was found that line image the images having good line image resolution, good color, and excellent image quality were formed on the decorated glasses obtained by the methods of decorating glass in Examples 1 to 5, and the turbidity of the glass in the non-image area was suppressed even after calcination.

On the other hand, in Comparative Example 1 in which no calcination was performed in Step C and in Comparative Example 2 in which the heating temperature was equal to or lower than the melting temperature of glass even though heating was performed, images having rub resistance could not be formed.

In addition, in Comparative Examples 9 to 11 in which the aggregating liquid having the content of elements other than C, O, N, F, and H of more than 1.0% was used, turbidity of the glass base material occurred in the area where the aggregating liquid was adhered, so that a decrease in transmittance was observed. From the comparison between Comparative Example 9 and Comparative Example 11, it can be seen that as the content of the elements other than C, O, N, F, and H increases, the occurrence of turbidity increases.

In Comparative Examples 5 to 8 in which the organic dye was used as the colorant, the image could not stand calcination, the tint of the image disappeared, or the light resistance was remarkably reduced.

### [Example 6]

### <Formation 17 of Ink Image by Ink Jet Method>

A decorated glass of Example 6 was obtained in the same manner as in Example 1 except that the ink compositions of Ex2Y, Ex2M, Ex2C, and Ex2Bk were used instead of the ink compositions of Ex1Y, Ex1M, Ex1C, and Ex1B1<, which were used in Example 1.

The evaluation was performed in the same manner as in Example 1. The evaluation results are shown in Table 3.

### [Example 7]

### <Formation 18 of Ink Image by Ink Jet Method>

A decorated glass of Example 7 was obtained in the same manner as in Example 1 except that the ink compositions of Ex3Y, Ex3M, Ex3C, and Ex3Bk were used instead of the ink compositions of Ex1Y, Ex1M, Ex1C, and Ex1Bk, which were used in Example 1.

The evaluation was performed in the same manner as in Example 1. The evaluation results are shown in Table 3.

**[Table 3]**

| | Ink composition | Aggregating liquid | Step of calcination at 730°C | Performance evaluation | | | | |
|---|---|---|---|---|---|---|---|---|
| | | | | Color | Image quality evaluation | Change in transmittance of non-image area | Rub resistance | Light resistance |
| Example 6 (Image formation 17) | Ex2Y, Ex2M, Ex2C, Ex2Bk | Ex1P | Performed | Y | B | A | A | A |
| | | | | M | B | | A | A |
| | | | | C | B | | A | A |
| | | | | K | B | | A | A |
| | | | | B | B | | A | A |
| | | | | G | B | | A | A |
| | | | | R | B | | A | A |
| | | | | 3C | B | | A | A |
| | | | | 4C | B | | A | A |
| Example 7 (Image formation 18) | Ex3Y, Ex3M, Ex3C, Ex3Bk | Ex1P | Performed | Y | B | A | A | A |
| | | | | M | B | | A | A |
| | | | | C | B | | A | A |
| | | | | K | B | | A | A |
| | | | | B | B | | A | A |
| | | | | G | B | | A | A |
| | | | | R | B | | A | A |
| | | | | 3C | B | | A | A |
| | | | | 4C | B | | A | A |

From the results in Table 3. it was found that the images having good line image resolution, good color reproducibility, and excellent image quality were formed on the decorated glasses obtained by the methods of decorating glass in Example 6 and Example 7, and the turbidity of the glass in the non-image area was suppressed even after calcination.

### Example 8

### <Formation 19 of Ink image by Ink Jet Method>

A decorated glass of Example 8 was obtained in the same manner as in Example 1 except that the aggregating liquid Ex6P was used instead of the aggregating liquid Ex1P, which is used in Example 1.

The evaluation was performed in the same manner as in Example 1. The evaluation results are shown in Table 4.

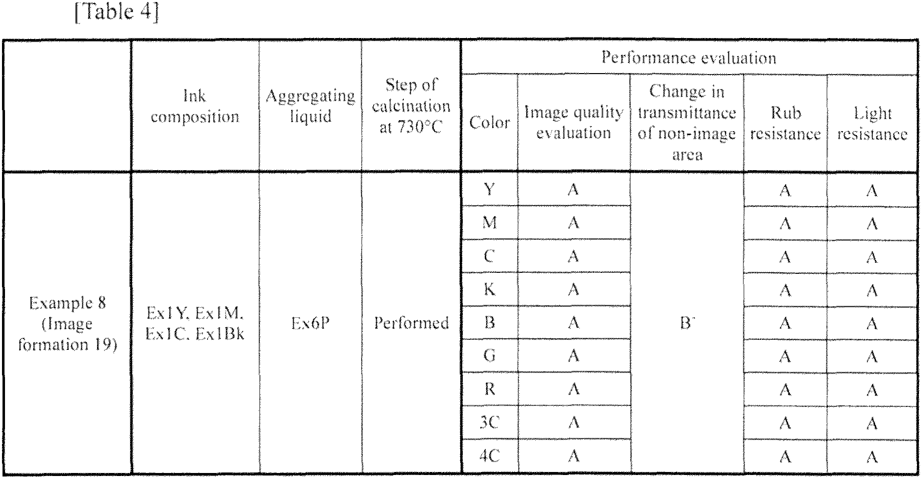

From the results of Table 4, it was found that line image the image having good line image resolution, good color, and excellent image quality was formed on the decorated glass obtained by the method of decorating glass in Example 8, and the turbidity of the glass in the non-image area was suppressed even after calcination.

From the comparison between Examples 1 to 5 and Example 8, and Examples 6 and 7. in Examples 6 and 7, the image formed by the ink compositions before calcination in step C had a low adhesive property for the glass base material and was necessary to be handled with extreme caution since the image formed by the ink composition was scraped off in a case where the surface on which the ink composition is applied was touched during handling. Thereby, it can be seen that in a case of using the ink composition containing urethane resin particles as compared to a case of using the ink composition containing acrylic resin particles or polyester resin particles, the more excellently stable ink image in the glass base material before calcination is obtained.

## Claims

1. A method of decorating glass comprising:
a step of applying an ink aggregating agent-containing composition on a glass base material; and
a step of forming an ink image by applying an ink composition containing an inorganic pigment, resin particles, and water by an ink jet method to at least a region on the glass base material, to which the ink aggregating agent-containing composition has been applied;
wherein the ink aggregating agent-containing composition contains water and an ink aggregating agent, and
a content of elements other than carbon, oxygen, nitrogen, fluorine, and hydrogen is 1.0% by mass or less with respect to a total solid content of the ink aggregating agent-containing composition,
the method comprising a step of heating the ink image formed by the ink image forming step to a melting temperature or higher of the glass being used as the glass base material.

2. The method of decorating glass according to claim 1, wherein the step of heating the formed ink image to a melting temperature of glass or higher is a step of heating an ink image to 500°C or higher.

3. The method of decorating glass according to claim 1 or 2, wherein the resin particles contain urethane resin particles.

4. The method of decorating glass according to any one of claims 1 to 3, wherein the ink aggregating agent contains at least one kind of compound selected from an acidic compound and a cationic polymer.

5. The method of decorating glass according to any one of claims 1 to 4, wherein the ink aggregating agent contains an acidic compound.

6. The method of decorating glass according to any one of claims 1 to 5, wherein the ink aggregating agent-containing composition has a surface tension of 30 mN/m or less.

7. The method of decorating glass according to any one of claims 1 to 6, wherein the ink aggregating agent-containing composition further contains a fluorine-based surfactant.

8. The method of decorating glass according to any one of claims 1 to 7, wherein the ink aggregating agent-containing composition is applied by an inkjet method.

9. The method of decorating glass according to any one of claims 1 to 8, wherein a content of elements other than carbon, oxygen, nitrogen, fluorine, and hydrogen is 0.1% by mass or less with respect to a total solid content of the ink aggregating agent-containing composition.

10. The method of decorating glass according to any one of claims 1 to 9, wherein the ink aggregating agent contains an organic acidic compound having a carboxyl group.

## Patentansprüche

1. Verfahren zum Dekorieren von Glas, umfassend:
einen Schritt des Auftragens einer ein Tintenaggregationsmittel enthaltenden Zusammensetzung auf ein Glasbasismaterial, und
einen Schritt des Erzeugens eines Tintenbildes durch Auftragen einer Tintenzusammensetzung, die ein anorganisches Pigment, Harzpartikel und Wasser enthält, durch ein Tintenstrahlverfahren auf mindestens einen Bereich auf dem Glasbasismaterial, auf das die Tintenaggregationsmittel enthaltende Zusammensetzung aufgetragen wurde;
wobei die ein Tintenaggregationsmittel enthaltende Zusammensetzung Wasser und ein Tintenaggregationsmittel enthält, und
ein Gehalt an anderen Elementen als Kohlenstoff, Sauerstoff, Stickstoff, Fluor und Wasserstoff 1,0 Massenprozent oder weniger beträgt, bezogen auf den Gesamtfeststoffgehalt der Tintenaggregationsmittel enthaltenden Zusammensetzung,
wobei das Verfahren einen Schritt des Erhitzens des durch den Tintenbilderzeugungsschritt gebildeten Tintenbildes auf eine Schmelztemperatur oder höher des als Glasbasismaterial verwendeten Glases umfasst.

2. Verfahren zum Dekorieren von Glas nach Anspruch 1, wobei der Schritt des Erhitzens des gebildeten Tintenbildes auf eine Schmelztemperatur von Glas oder höher ein Schritt des Erhitzens eines Tintenbildes auf 500°C oder höher ist.

3. Verfahren zum Dekorieren von Glas nach Anspruch 1 oder 2, wobei die Harzpartikel Urethanharzpartikel enthalten.

4. Verfahren zum Dekorieren von Glas nach einem der Ansprüche 1 bis 3, wobei das Tintenaggregationsmittel mindestens eine Art von Verbindung enthält, die aus einer sauren Verbindung und einem kationischen Polymer ausgewählt ist.

5. Verfahren zum Dekorieren von Glas nach einem der Ansprüche 1 bis 4, wobei das Tintenaggregationsmittel eine saure Verbindung enthält.

6. Verfahren zum Dekorieren von Glas nach einem der Ansprüche 1 bis 5, wobei die ein Tintenaggregationsmittel enthaltende Zusammensetzung eine Oberflächenspannung von 30 mN/m oder weniger aufweist.

7. Verfahren zum Dekorieren von Glas nach einem der Ansprüche 1 bis 6, wobei die ein Tintenaggregationsmittel enthaltende Zusammensetzung ferner ein Fluor-basiertes Tensid enthält.

8. Verfahren zum Dekorieren von Glas nach einem der Ansprüche 1 bis 7, wobei die ein Tintenaggregationsmittel enthaltende Zusammensetzung durch ein Tintenstrahlverfahren aufgebracht wird.

9. Verfahren zum Dekorieren von Glas nach einem der Ansprüche 1 bis 8, wobei ein Gehalt an anderen Elementen als Kohlenstoff, Sauerstoff, Stickstoff, Fluor und Wasserstoff 0,1 Massenprozent oder weniger in Bezug auf den Gesamtfeststoffgehalt der ein Tintenaggregationsmittel enthaltenden Zusammensetzung beträgt.

10. Verfahren zum Dekorieren von Glas nach einem der Ansprüche 1 bis 9, wobei das Tintenaggregationsmittel eine organische saure Verbindung mit einer Carboxylgruppe enthält.

## Revendications

1. Procédé destiné à décorer du verre, comprenant les étapes suivantes :
une étape pour appliquer une composition contenant un agent d'agrégation d'encre sur un matériau de base en verre, et
une étape pour former une image d'encre en appliquant une composition d'encre contenant un pigment inorganique, des particules de résine, et de l'eau par un procédé à jet d'encre sur au moins une région sur le matériau de base en verre sur laquelle la composition contenant un agent d'agrégation d'encre a été appliquée ;
dans lequel la composition contenant un agent d'agrégation d'encre contient de l'eau et un agent d'agrégation d'encre, et
une teneur en éléments autres que le carbone, l'oxygène, l'azote, le fluor, et l'hydrogène est inférieure ou égale à 1,0% en masse par rapport à une teneur totale en matière sèche de la composition contenant un agent d'agrégation d'encre,
le procédé comprenant une étape pour chauffer l'image d'encre formée par l'étape de formation d'image d'encre à une température de fusion ou supérieure du verre utilisé pour le matériau de base en verre.

2. Procédé destiné à décorer du verre selon la revendication 1, dans lequel l'étape pour chauffer l'image d'encre formée à une température de fusion du verre ou supérieure est une étape pour chauffer une image d'encre à une température supérieure ou égale à 500 °C.

3. Procédé destiné à décorer du verre selon la revendication 1 ou 2, dans lequel les particules de résine contiennent des particules de résine d'uréthane.

4. Procédé destiné à décorer du verre selon l'une quelconque des revendications 1 à 3, dans lequel l'agent d'agrégation d'encre contient au moins un type de composé sélectionné à partir d'un composé acide et d'un polymère cationique.

5. Procédé destiné à décorer du verre selon l'une quelconque des revendications 1 à 4, dans lequel l'agent d'agrégation d'encre contient un composé acide.

6. Procédé destiné à décorer du verre selon l'une quelconque des revendications 1 à 5, dans lequel la composition contenant un agent d'agrégation d'encre présente une tension superficielle inférieure ou égale à 30 mN/m.

7. Procédé destiné à décorer du verre selon l'une quelconque des revendications 1 à 6, dans lequel la composition contenant un agent d'agrégation d'encre contient en outre un agent de surface à base de fluor.

8. Procédé destiné à décorer du verre selon l'une quelconque des revendications 1 à 7, dans lequel la composition contenant un agent d'agrégation d'encre est appliquée par un procédé à jet d'encre.

9. Procédé destiné à décorer du verre selon l'une quelconque des revendications 1 à 8, dans lequel une teneur en éléments autres que le carbone, l'oxygène, l'azote, le fluor, et l'hydrogène est inférieure ou égale à 0,1% en masse par rapport à une teneur totale en matière sèche de la composition contenant un agent d'agrégation d'encre.

10. Procédé destiné à décorer du verre selon l'une quelconque des revendications 1 à 9, dans lequel l'agent d'agrégation d'encre contient un composé acide organique présentant un groupe carboxyle.
